# EUROPÄISCHE PATENTSCHRIFT

(11) **EP 3 259 168 B1**
(45) Veröffentlichungstag und Bekanntmachung des Hinweises auf die Patenterteilung: **21.04.2021**
(21) Anmeldenummer: 16706809.7
(22) Anmeldetag: 10.02.2016
(51) Int. Cl.: B61F 5/30, F16F 13/08, F16F 1/41

(54) **PRIMÄRFEDER FÜR EIN SCHIENENFAHRZEUG**
PRIMARY SPRING FOR A RAIL VEHICLE
RESSORT PRIMAIRE POUR VÉHICULE FERROVIAIRE

(30) Priorität: 17.02.2015 AT 501192015
(43) Veröffentlichungstag der Anmeldung: 27.12.2017
(73) Patentinhaber: Siemens Mobility Austria GmbH, 1210 Wien (AT)
(72) Erfinder: FAETHE, Tobias, 8073 Feldkirchen bei Graz (AT)
(74) Vertreter: Deffner, Rolf
(86) Internationale Anmeldenummer: PCT/EP2016/052807
(87) Internationale Veröffentlichungsnummer: WO 2016/131688

(56) Entgegenhaltungen:
- EP-A2- 0 392 414
- EP-B1- 0 360 783
- EP-B1- 1 346 166
- JP-A- H0 450 074

## Beschreibung

### Technisches Gebiet

Die Erfindung betrifft eine Primärfeder für ein Schienenfahrzeug, mit einem eine Längsachse aufweisenden zentralen Trägerelement, einem Federelement und einem Aufnahmeelement,
wobei das Federelement zwischen dem zentralen Trägerelement und dem Aufnahmeelement angeordnet ist und sowohl mit dem zentralen Trägerelement als auch mit dem Aufnahmeelement verbunden ist,
wobei zumindest zwei mit Fluid gefüllte Kammern vorgesehen sind, welche miteinander verbunden sind, um abhängig von einer aufgezwungenen Anregungsfrequenz Fluid zwischen den Kammern auszutauschen, wodurch sich die Steifigkeit in radialer Richtung frequenzabhängig verändert.

Die Primärfeder ist im Betriebszustand in ein Schienenfahrzeug eingebaut, und zwar mit einer Hauptwirkungsrichtung entlang einer Höhenrichtung des Schienenfahrzeugs zwischen einem Fahrwerksrahmen und einer Radachse des Schienenfahrzeuges, wobei die Längsachse des zentralen Trägerelements parallel zur Höhenrichtung des Schienenfahrzeuges ausgerichtet ist.

### Stand der Technik

Die Primärfedern, auch Primärfederung genannt, eines Schienenfahrzeuges verbinden zumindest eine Radachse des Schienenfahrzeuges mit einem Fahrwerksrahmen, welcher Fahrwerksrahmen über eine Sekundärfederung mit einem Waggonunterteil verbunden sein kann und weitere Komponenten des Schienenfahrzeuges trägt. Die Primärfeder dient dabei hauptsächlich zur Übertragung der Kräfte zwischen Fahrwerksrahmen und Radachse entlang einer Hauptwirkungsrichtung.

Die Radachse verbindet zwei Räder des Schienenfahrzeuges starr miteinander, wobei die Laufflächen der Räder üblicher Weise konisch profiliert, also vom Spurkranz nach außen hin verjüngt, sind, um die Laufeigenschaften in einer Kurvenfahrt zu verbessern. Es gibt jedoch auch Ausführungsvarianten von Drehgestellen, bei der die Räder als Losräder, also ohne verbindende Radachse, ausgeführt sind, wobei die Losräder mittels Primärfeder an das Drehgestell angebunden sind. Bei diesen Ausführungsvarianten ist unter dem Begriff Radachse die Achse eines einzelnen Losrades zu verstehen.

Jedoch führen die starre Verbindung der Räder mittels Radachse und die Profilierung der Laufflächen dazu, dass es bei Abweichungen von einer theoretischen ideal-geraden Schienenführung zu einer Überkompensation und Schwingungsanregung mittels einer Anregungsfrequenz kommt, welche die Entstehung einer Schlingerbewegung, auch bekannt unter dem Begriff Sinuslauf, begünstigt. Bei der Schlingerbewegung bewegen sich die beiden Räder einer Radachse sowohl parallel in der Breitenrichtung als auch gegenläufig in einer Längenrichtung, welche der Fahrtrichtung des Schienenfahrzeuges entspricht.

Vor allem bei hohen Fahrtgeschwindigkeiten, welche hohe Anregungsfrequenzen hervorrufen, ist die Entstehung einer Schlingerbewegung nicht erwünscht, da einerseits der Lauf des Schienenfahrzeuges durch die Schlingerbewegung der Radachse unruhig wird und andererseits ein hoher Verschleiß der Schienen sowie der Laufflächen bzw. Spurkränze der Räder die Folge ist.

Um die Effekte der Schlingerbewegung bei hohen Anregungsfrequenzen zu minimieren, ist es also notwendig, dass die Primärfedern eine hohe Steifigkeit entlang der Längenrichtung aufweisen, um die Bewegung der Räder gegeneinander bzw. der Radachse in Längenrichtung größten Teils zu verhindern.

In einer Kurvenfahrt jedoch führt die zuvor geforderte hohe Steifigkeit entlang der Längenrichtung jedoch zu einem negativen Effekt: die Radachsen können sich nicht tangential in den Kurvenbogen stellen, wodurch die Spurkränze der Räder an den Schienen schleifen und die Schienen bzw. die Spurkränze einem hohen Verschleiß ausgesetzt sind. Eine geringere Steifigkeit entlang der Längenrichtung würde diese Effekte jedoch kompensieren.

Da in Kurvenfahrten generell nur niedrigere Geschwindigkeiten möglich sind, woraus auch geringe Anregungsfrequenzen resultieren, fällt der Effekt der zuvor beschriebenen Schlingerbewegung hingegen nicht ins Gewicht.

Aus der EP 0 360 783 B1 ist eine Primärfederung bekannt, bei der zusätzlich zu einer Primärfeder in Form einer Schraubenfeder eine Gummi-Metall-Buchse vorgesehen ist, in welcher Gummi-Metall-Buchse zwei mit Fluid gefüllte, in Längsrichtung diametral gegenüberliegende Kammern angeordnet sind. Diese Kammern kommunizieren miteinander oder mit Kammern anderer Buchsen, um durch den Fluidaustausch zwischen den Kammern bzw. die Verhinderung dessen die Steifigkeit der Primärfederung beliebig einstellbar zu machen. Ein Nachteil dieser Erfindung ist jedoch darin zu sehen, dass die Primärfederung sowohl über ein Federelement verfügt, über welches die Federkräfte entlang der Hauptwirkungsrichtung übertragen werden, als auch über eine komplizierte Konstruktion zur Anbindung der Gummi-Metall-Buchse. Die Steifigkeit lässt sich des Weiteren nur entweder zwischen zwei Kammern verschiedener Primärfedern oder durch zusätzliche Schaltmittel verändern.

Aus der DE 103 10 634 A1 ist ein Achslenkerlager bekannt, bei welchem zwischen Lenkerbolzen und Lenkerauge eine hydraulische Buchse angeordnet ist, welche Buchse zwei diametral gegenüberliegende Kammern aufweist, wobei die Kammern durch einen Überlaufkanal miteinander verbunden sind. Die Kammern und die Überlaufleitung sind mit Fluid gefüllt, welches im Gegentakt zu einer aufgezwungenen Anregungsfrequenz als Flüssigkeitssäule schwingt und somit schwingungstilgende Eigenschaften aufweist. Bei Überschreiten einer Schaltfrequenz, welche über die Kanalgeometrie beeinflussbar ist, ändert sich die Steifigkeit des Achslenkerlagers in Längsrichtung. Eine derartige Buchse ist jedoch nicht für den Einsatz in einer Primärfeder geeignet, da jedenfalls zusätzlich noch ein Federelement zur Übertragung der Kräfte entlang der Hauptwirkungsrichtung vorgesehen werden muss und die Buchse durch aufwändige konstruktive Maßnahmen an die Primärfeder angebunden werden muss.

Die EP 1 346 166 B1 beschreibt eine Hydrofeder mit zwei Kammern, die in Richtung der Hauptwirkungsrichtung gesehen über einander angeordnet und durch einen Verbindungskanal verbunden sind, wobei ein Federelement in Form einer mehrschichtigen Schubfeder die Unterseite einer der Kammern ausbildet. Eine solche Hydrofeder ist nicht geeignet frequenzabhängig die Steifigkeit in radialer Richtung zu verändern.

Weiterhin zeigt die JP H04 50074 A eine Schichtfeder für ein Fahrwerk für ein Schienenfahrzeug mit in einem Randbereich angeordneten Fluidkammern, welche über eine, die Schichtfeder teilweise umgrenzende, Verbindungsleitung gekoppelt sind.

### Aufgabe der Erfindung

Es ist daher eine Aufgabe der vorliegenden Erfindung die Nachteile des Stands der Technik zu überwinden und eine Primärfeder zwischen einem Fahrwerksrahmen und einer Radachse eines Schienenfahrzeuges zur Verfügung zu stellen, welche sich durch eine kompakte Bauform auszeichnet und dabei abhängig von einer aufgezwungenen Anregungsfrequenz die Steifigkeit in radialer Richtung verändert.

### Darstellung der Erfindung

Diese Aufgabe wird durch eine Primärfeder mit den Merkmalen des Patentanspruchs 1 gelöst. Vorteilhafte Ausgestaltungen der Erfindung sind in den jeweiligen abhängigen Ansprüchen definiert.

Die Erfindung betrifft eine Primärfeder für ein Schienenfahrzeug, mit einem eine Längsachse aufweisenden zentralen Trägerelement, einem Federelement und einem Aufnahmeelement,
wobei das Federelement zwischen dem zentralen Trägerelement und dem Aufnahmeelement angeordnet ist und sowohl mit dem zentralen Trägerelement als auch mit dem Aufnahmeelement verbunden ist,
wobei zumindest zwei mit Fluid gefüllte Kammern vorgesehen sind, welche miteinander verbunden sind, um abhängig von einer aufgezwungenen Anregungsfrequenz Fluid zwischen den Kammern auszutauschen, wodurch sich die Steifigkeit in radialer Richtung frequenzabhängig verändert.

### Dabei ist erfindungsgemäß vorgesehen, dass das

Federelement als mehrschichtige Schubfeder ausgebildet ist und zumindest eine innere Elastomerschicht, welche mit dem zentralen Trägerelement verbunden ist, eine äußere Elastomerschicht, welche mit dem Aufnahmeelement verbunden ist, sowie jeweils eine versteifende Zwischenschicht zwischen den Elastomerschichten umfasst, wobei die Elastomerschichten bezüglich der Längsachse eine konische Form aufweisen und die Kammern innerhalb einer Elastomerschicht angeordnet sind.

Durch die Anordnung der Kammern in einer Elastomerschicht wird die schwingungstilgende Funktion, welche auf dem Flüssigkeitsaustausch zwischen den Kammern beruht, in das Federelement integriert, welches aufgrund der Ausprägung als mehrschichtige Schubfeder äußerst kompakt ist. Da keine beweglichen Teile nötig sind, sind auch der Wartungsaufwand und der Verschleiß der Primärfeder sehr gering. In anderen Worten wird eine Primärfeder vorgeschlagen, welche positive Eigenschaften hinsichtlich der Baugröße, der Anzahl der Bauteile aufweist, sowie eine frequenzabhängige Änderung der Steifigkeit der mehrschichtigen Schubfeder in radialer Richtung zulässt.

Das Wirkungsprinzip mehrschichtiger Schubfedern beruht darauf, dass zwei Seitenflächen einer Elastomerschicht gegeneinander verschoben werden und die Elastomerschicht dadurch Schubspannungen aufnimmt. So wird Kraft entlang einer Hauptwirkungsrichtung im Wesentlichen parallel zu den Seitenflächen übertragen. Zwischen zwei Elastomerschichten einer mehrschichtigen Schubfeder ist jeweils eine versteifende Schicht angeordnet, sodass jede Elastomerschicht nur eine genau definierte maximale elastische Verformung aufweisen kann, ohne dabei plastisch verformt zu werden. Durch die konische Form der Elastomerschichten können auch Kräfte in axialer Richtung von der Schubfeder aufgenommen werden.

Zusätzlich dazu werden durch eine Verringerung der Kräfte am Rad, aufgrund der frequenzabhängigen Veränderung der Steifigkeit, auch die Anbauteile einer geringeren Belastung ausgesetzt, sodass der Fahrwerksrahmen bzw. das Drehgestell kleiner dimensioniert sein können. Das führt des Weiteren zu einem Energiesparpotential gegenüber Drehgestellen mit herkömmlichen Primärfedern und zu vergrößerten Wartungsintervallen. Einen weiteren positiven Nebeneffekt stellt die verringerte Geräuschemission dar.

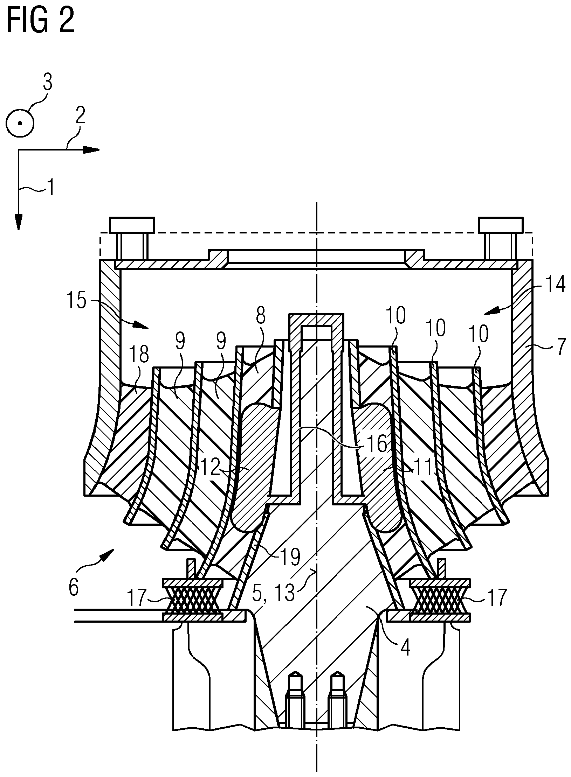

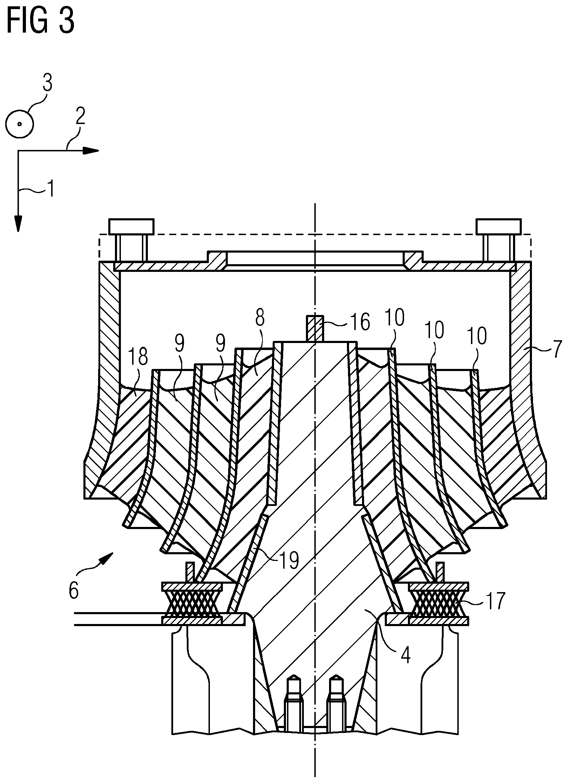

Das zentrale Trägerelement, das Aufnahmeelement, die Elastomerschichten (bis auf die Kammern) und die Zwischenschichten der Primärfeder werden in der Regel rotationssymmetrisch um die Längsachse des zentralen Trägerelements ausgebildet sein. Unter den Begriff "konische Form" fallen nicht nur Bauteile in der Form eines Kegelstumpfmantels, wo also eine geneigte Linie die Erzeugende des Bauteils ist, sondern auch Bauteile, deren Erzeugende eine gekrümmte Linie ist, deren Abstand von der Rotationsachse längs der Rotationsachse (= der Längsachse des zentralen Trägerelements) zunimmt. Insbesondere sind dabei Formen umfasst, wo die Krümmung der Erzeugenden längs der Rotationsachse zunimmt, der Bauteil also etwa eine Glockenform aufweist. Es sind auch kombinierte Formen möglich, also Formen, wo die Erzeugende teils eine gerade und teils eine gekrümmte Linie ist. Ein Beispiel dafür ist in den Fig. 2 und 3 dargestellt, wo die Elastomer- und Zwischenschichten im oberen Teil die Form eines Kegelstumpfmantels aufweisen und im unteren Teil die Form einer Glocke.

Um die Steifigkeit der mehrschichtigen Schubfeder entlang einer definierten Richtung frequenzabhängig veränderbar zu machen sieht eine Ausführungsvariante einer erfindungsgemäßen Primärfeder vor, dass durch eine Teilungsebene, welche durch die Längsachse des zentralen Trägerelementes verläuft, ein erster Abschnitt und ein zweiter Abschnitt der Schubfeder definiert ist, wobei im ersten Abschnitt zumindest eine erste Kammer und im zweiten Abschnitt zumindest eine zweite Kammer angeordnet ist und die zumindest eine erste Kammer mit der zumindest einen zweiten Kammer verbunden ist, wobei abhängig von der Anregungsfrequenz ein Austausch von Fluid zwischen der zumindest einen ersten Kammer und der zumindest einen zweiten Kammer stattfindet.

Wenn Fluid von der zumindest einen ersten Kammer in die zumindest eine mit der ersten verbundene zweite Kammer übertritt und es zu einem Austausch des Fluids zwischen den Kammern kommt, ändert sich damit die Steifigkeit der gesamten mehrschichtigen Schubfeder. Mittels der durch die Teilungsebene definierten Abschnitte, in denen sich die Kammern befinden, kann die Richtung, entlang derer sich die Steifigkeit ändert, genau eingestellt werden. Beispielsweise kann die Teilungsebene im eingebauten Zustand der Primärfeder normal auf eine Längenrichtung des Schienenfahrzeugs stehen, so dass die Steifigkeit entlang dieser Längenrichtung variabel ist.

Es versteht sich von selbst, dass bei alternativen Ausführungsvarianten die zumindest eine erste und zweite Kammer noch weiter unterteilt sein können, sodass Fluid zwischen mehr als zwei Kammern ausgetauscht wird.

Erfindungsgemäß ist in der inneren Elastomerschicht, welche dem zentralen Trägerelement am nächsten liegt, die zumindest eine erste und zumindest eine zweite Kammer angeordnet. Diese Elastomerschicht eignet sich insbesondere für die Aufnahme der Kammern, da diese Elastomerschicht fertigungstechnisch am einfachsten zugänglich ist, um die
hohlen Fluidkammer auszuformen bzw. die Schubfeder bei der Herstellung entformen zu können Gemäß einer bevorzugten Ausführungsvariante ist auch in der äußeren Elastomerschicht zumindest eine erste und zumindest eine zweite Kammer angeordnet.

Erfindungsgemäß ist die zumindest eine erste Kammer mit der zumindest einen zweiten Kammer über eine Verbindungsleitung verbunden und die Verbindungsleitung zumindest teilweise durch das zentrale Trägerelement geführt. Durch eine derartige Anordnung der Verbindungsleitung wird erreicht, dass diese zum größten Teil nicht durch die Elastomerschichten geführt wird. Da das zentrale Trägerelement vorzugsweise aus Stahl gefertigt ist, ist die Stabilität der Verbindungsleitung, die beispielsweise als Bohrung parallel zur Längsachse des Trägerelementes ausgeführt sein kann, jedenfalls gegeben ohne weitere Maßnahmen treffen zu müssen. Bei einem Verlauf durch eine der Elastomerschichten hingegen würde eine Bohrung nicht ausreichen, da sich die Elastomerschicht aufgrund des Druckes in der Verbindungsleitung auch entlang dieser ausdehnen würde.

Sind die Kammern auch in der äußeren Elastomerschicht angeordnet, so ist in einer weiteren bevorzugten Ausführungsvariante der Erfindung vorgesehen, dass eine Verbindungsleitung zwischen der zumindest einen ersten und der zumindest einen zweiten Kammer zumindest teilweise durch das Aufnahmeelement verläuft. Damit wird, analog zur Führung durch das zentrale Trägerelement, die Stabilität der Verbindungsleitung gewährleistet. Dies schließt natürlich nicht aus, dass die Verbindungsleitung außerhalb des Aufnahmeelementes weiter geführt wird, etwas durch einen Kanal oder ein Rohr.

Gemäß einer nicht beanspruchten Anordnung verläuft die Verbindungsleitung zumindest teilweise durch eine versteifende Zwischenschicht, welche Zwischenschicht an die innere bzw. äußere Elastomerschicht grenzt. Dabei ist je nach Anordnung der Kammern in der inneren oder äußeren Elastomerschicht die entsprechende Zwischenschicht, welche an die mit Kammern versehene Elastomerschicht grenzt, zu verstehen. Die Zwischenschicht selbst kann dabei beispielsweise aus zwei, in Bezug zur Längsachse des zentralen Trägerelements, konzentrischen Platten bestehen, welche miteinander verbunden, vorzugsweise verschweißt oder verklebt, sind, wobei die Platten derart gestaltet sind, dass diese im verbundenen Zustand gemeinsam einen Kanal ausbilden, der als Verbindungsleitung dient. Dies kann beispielsweise durch eine Ausnehmung auf zumindest einer der Platten erreicht werden, wobei die Ausnehmung auf der der jeweils anderen Platte zugewandten Seite angeordnet ist.

In weiteren alternativen Ausführungsvarianten, ist die Verbindungsleitung mit einer Pumpe verbunden, sodass der Druck in den Kammern und damit die radiale Steifigkeit der mehrschichtigen Schubfeder unabhängig von der aufgezwungenen Anregungsfrequenz beeinflussbar ist. Durch die Pumpe sind die Kammern somit aktiv ansteuerbar, sodass die Radialstellung des Radsatzes im Bogen direkt beeinflussbar ist.

Über die Dimensionierung der Verbindungsleitung kann ein entsprechender Tilger-Effekt erreicht werden. Besonders zu berücksichtigen ist dabei das Verhältnis zwischen der Länge und dem Querschnitt der Verbindungsleitung, die Größe bzw. Geometrie der Querschnittsfläche der Verbindungsleitung und die Viskosität des Fluids.

In einer weiteren bevorzugten Ausführungsvariante sind in der Verbindungsleitung Mittel zur Unterbrechung des Fluidaustauschs zwischen der zumindest einen ersten Kammer und der zumindest einen zweiten Kammer angeordnet. Als Mittel zur Unterbrechung kann beispielsweise ein elektromagnetisch angesteuertes Ventil verwendet werden. Eine Unterbrechung des Fluidaustausches kann zum Beispiel auch durch eine Erhöhung des Druckes in der Verbindungsleitung erzielt werden, sodass die Steifigkeit der mehrschichtigen Schubfeder durch die mit Druck gefüllten Kammern erhöht wird. Durch eine Messanordnung kann die Anregungsfrequenz gemessen werden und der Druckaufbau abhängig von der Anregungsfrequenz geändert werden. Auch kann durch die Verengung des Querschnittes der Verbindungsleitung eine aktive Regelung der Steifigkeit in Abhängigkeit verschiedener Parameter, wie Fahrtgeschwindigkeit oder Beladung, realisiert werden.

Um die Länge der Verbindungsleitung zu vergrößern und den Durchmesser des Querschnitts der Verbindungsleitung beeinflussbar zu machen, ist in weiteren bevorzugten Ausführungsvarianten vorgesehen, dass Verbindungsleitung erstens - zumindest großteils - kreisförmig oder spiralförmig in Bezug zur Längsachse verläuft, dass die Verbindungsleitung zweitens - zumindest großteils - mäanderförmig in Bezug zur Längsachse verläuft, oder dass die Verbindungsleitung drittens - zumindest großteils - sowohl kreisförmige oder spiralförmige als auch mäanderförmige Abschnitte aufweist. Damit ist in einfacher Art und Weise das Verhältnis von Länge und Querschnittsfläche der Verbindungsleitung einstellbar. Gemäß einer besonders bevorzugten Ausführungsvariante einer erfindungsgemäßen Primärfeder bilden die zumindest eine erste Kammer, die zumindest eine zweite Kammer und die Verbindungsleitung ein abgeschlossenes Fluidsystem, welches vollständig mit Fluid gefüllt ist und durchströmt das Fluid das Fluidsystem frei. Durch das Vorsehen eines abgeschlossenen Fluidsystems ist eine zusätzliche Regelung des Fluidaustausches nicht mehr notwendig. Die Verbindungsleitung ist so dimensioniert, dass abhängig von der Anregungsfrequenz ein Austausch von Fluid stattfinden kann. So wird erreicht, dass einerseits das Fluid in einem Bereich der Anregungsfrequenz (bei niedrigeren Frequenzen) von zumindest einer ersten in zumindest eine zweite Kammer übertreten kann und damit die Steifigkeit der mehrschichtigen Schubfeder niedriger ist und andererseits in einem anderen Bereich der Anregungsfrequenz (bei höheren Frequenzen) der Austausch von Fluid unterbunden ist, und die Primärfeder in beiden Abschnitten der mehrschichtigen Schubfeder eine gleich hohe Steifigkeit aufweist. Dies wird durch das an sich bekannte Prinzip der Schwingungstilgung mittels schwingender Flüssigkeitssäulen erreicht, wobei das System aus Kammern und Verbindungsleitung ein schwingungsfähiges System mit bestimmten Eigenfrequenzen darstellt. Schwingt die Flüssigkeitssäule im Gegentakt zur aufgezwungenen Anregungsfrequenz, so wirkt diese als Schwingungstilger, wodurch bei entsprechender Dimensionierung die Steifigkeit in radialer Richtung bei hohen Anregungsfrequenzen erhöht ist.

Auch das Verhältnis zwischen dem Leitungsvolumen und dem Fluidvolumen ist von Bedeutung für die Funktion eines selbstregulierenden Fluidsystems. Befindet sich zu viel Fluid innerhalb der Verbindungsleitung und zu wenig in den Kammern, so kann dies zu Druckstößen führen und die Kammern beschädigen. Im umgekehrten Fall ist die Leitung zu klein dimensioniert, so dass das der Fluidaustausch erschwert und verlangsamt wird.

Um eine elastische Verformung der zumindest zwei Kammern durch zugeführtes oder abgeleitetes Fluid zu ermöglichen und dadurch eine Änderung des Druckes und der Steifigkeit in einem der Abschnitte der mehrschichtigen Schubfeder zu erreichen, ist vorgesehen, dass die Umwandung der zumindest zwei mit Fluid gefüllten Kammern elastisch ist.

In einer weiteren besonders bevorzugten Ausführungsform ist vorgesehen, dass die Menge des bei einer niedrigen Anregungsfrequenz über die Verbindungsleitung ausgetauschten Fluids größer ist als jene bei einer hohen Anregungsfrequenz, so dass die Steifigkeit der mehrschichtigen Schubfeder und damit der Primärfeder in radialer Richtung bei einer niedrigen Anregungsfrequenz niedriger ist als bei einer hohen Anregungsfrequenz. Die räumliche Lage dieser radialen Richtung ist von der gegenseitigen Anordnung von erster und zweiter Kammer abhängig. Sie kann im montierten Zustand der Primärfeder z.B. in Längenrichtung des Schienenfahrzeugs oder in Breitenrichtung des Schienenfahrzeugs verlaufen.

Diese Ausführungsvariante stellt insbesondere für Schienenfahrzeuge eine optimale Lösung dar. Bei niedrigen Geschwindigkeiten mit den daraus resultierenden niedrigen Anregungsfrequenzen ist die Steifigkeit der mehrschichtigen Schubfeder geringer als bei hohen Geschwindigkeiten und den daraus resultierenden hohen Anregungsfrequenzen. So wird beispielsweise einer Schlingerbewegung bei hohen Geschwindigkeiten entgegengewirkt und trotzdem kann sich die Radachse bei niedrigen Geschwindigkeiten tangential in einen Bogen einer Kurve stellen, so dass Gleise und Räder gleichermaßen geschont werden.

Die eingangs gestellte Aufgabe wird auch durch ein Fahrwerk, insbesondere Drehgestell, mit zumindest einer Radachse, einem Fahrwerksrahmen und zumindest einer erfindungsgemäßen Primärfeder gelöst, wobei die Teilungsebene der mehrschichtigen Schubfeder parallel zu der Radachse ausgerichtet ist. Dadurch wird die auf den Fahrwerksrahmen wirkende Kraft über die zumindest eine Primärfeder in die zumindest eine Radachse entlang einer Hauptwirkungsrichtung (entlang einer Höhenrichtung des Schienenfahrzeugs) übertragen. Durch die Ausrichtung der Teilungsebene wird erreicht, dass der erste und zweite Abschnitt der mehrschichtigen Schubfeder respektive die in den Abschnitten angeordneten ersten und zweiten Kammern entlang der Längenrichtung des Schienenfahrzeuges ausgerichtet sind, so dass der Fluidaustausch und dementsprechend auch die Änderung der Steifigkeit entlang der Längenrichtung stattfindet.

Beim Fahrwerk sind in der Regel pro Rad zwei erfindungsgemäße Primärfedern vorgesehen, eine - in Längenrichtung des Schienenfahrzeugs gesehen - vor der Radachse und eine hinter der Radachse.

Es ist dabei auch denkbar, dass die erste Kammer einer Primärfeder mit der zweiten Kammer einer weiteren Primärfeder verbunden ist, sodass ein Fluidaustausch zwischen zwei unterschiedlichen Primärfedern stattfindet.

In einer Ausführungsvariante ist vorgesehen, dass das zentrale Trägerelement der zumindest einen Primärfeder mit der Radachse und das Aufnahmeelement der zumindest einen Primärfeder mit dem Fahrwerksrahmen verbunden ist. So kann in einfacher Art und Weise die Kraftübertragung zwischen Radachse und Fahrwerksrahmen bewerkstelligt werden.

Gemäß einer bevorzugten Ausführungsvariante ist zumindest eine Entkoppelungsschicht, vorzugsweise ein Gleitlager oder eine Schichtfeder, zwischen der mehrschichtigen Schubfeder und der Radachse angeordnet, um die zumindest eine Elastomerschicht, welche die Kammern aufweist, entlang der zur Höhenrichtung parallelen Hauptwirkungsrichtung zu entlasten. Da der tragende Querschnitt jener Elastomerschicht die durch erste oder zweite Kammer geschwächt sind, vermindert ist, ist die Entkoppelungsschicht vorgesehen, um die Kraftübertragung entlang der zur Höhenrichtung parallelen Hauptwirkungsrichtung sicherzustellen. Die Elastomerschichten die eine Kammer aufweisen, werden an der Radachse von der Entkoppelungsschicht abgestützt, wodurch die Elastomerschichten sozusagen entlang der Höhenrichtung kurz geschlossen sind.

In einer alternativen Ausführungsvariante der Erfindung ist vorgesehen, dass das zentrale Trägerelement der zumindest einen Primärfeder mit dem Fahrwerksrahmen und das Aufnahmeelement der zumindest einen Primärfeder mit der Radachse verbunden ist und/oder dass zumindest eine Entkoppelungsschicht, vorzugsweise ein Gleitlager oder eine Schichtfeder, zwischen der mehrschichtigen Schubfeder und dem Fahrwerksrahmen angeordnet ist, um die zumindest eine Elastomerschicht, welche die Kammern aufweist, entlang der zur Höhenrichtung parallelen Hauptwirkungsrichtung zu entlasten. Dies stellt eine alternative Anbindung der Primärfeder an Fahrwerksrahmen und Radachse dar, welche bei bestimmten Bauformen zu bevorzugen ist. Die Vorteile dieser Anbindung entsprechen im Wesentlichen den zuvor genannten.

Anzumerken ist, dass das Federelement grundsätzlich auch als einschichtige Schubfeder ausgebildet sein könnte, also nur eine Elastomerschicht vorgesehen ist, welche dann mit dem zentralen Trägerelement und mit dem Aufnahmeelement verbunden ist, wobei die Elastomerschicht bezüglich der Längsachse eine konische Form aufweist und die Kammern innerhalb der Elastomerschicht angeordnet sind. Dabei würden lediglich die versteifenden Zwischenschichten wegfallen, insbesondere alle auf die Kammern bezogenen Ausführungsvarianten der Schubfeder wären gleich. Die Elastomerschicht dürfte dann an der Radachse nicht von einer Entkoppelungsschicht abgestützt werden, also nicht entlang der Höhenrichtung kurz geschlossen sein.

### Kurzbeschreibung der Figuren

Zur weiteren Erläuterung der Erfindung wird im nachfolgenden Teil der Beschreibung auf die Figuren Bezug genommen, aus der weitere vorteilhafte Ausgestaltungen, Einzelheiten und Weiterbildungen der Erfindung zu entnehmen sind. Die Figuren sind als beispielhaft zu verstehen und sollen den Erfindungscharakter zwar darlegen, ihn aber keinesfalls einengen oder gar abschließend wiedergeben. Es zeigen:
- Fig. 1: eine Draufsicht einer erfindungsgemäßen Primärfeder
- Fig. 2: eine Schnittansicht gemäß der Linie AA aus Fig. 1
- Fig. 3: eine Schnittansicht gemäß der Linie BB aus Fig. 1

### Ausführung der Erfindung

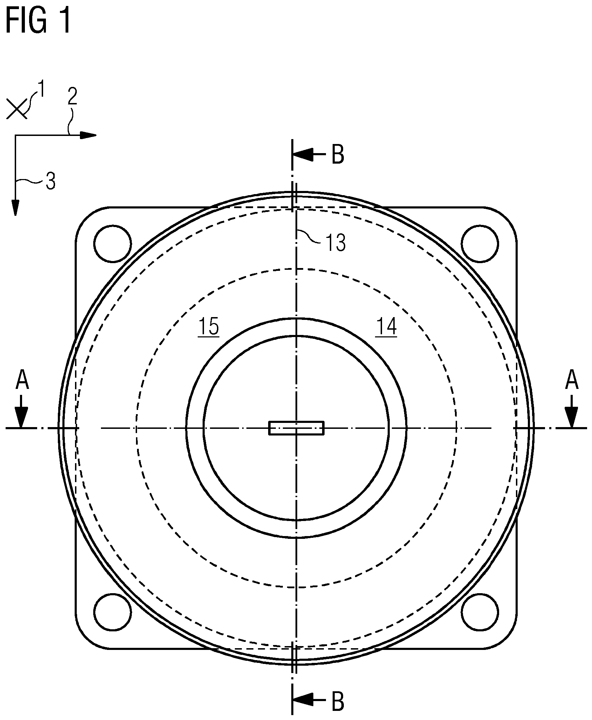

In Figur 1 sind eine in die Bildebene weisende Höhenrichtung 1, eine Längenrichtung 2 sowie eine Breitenrichtung 3 eingezeichnet. Eine Teilungsebene 13, welche normal auf die Längenrichtung 2 steht, definiert einen ersten Abschnitt 14 und einen zweiten Abschnitt 15 der Primärfeder.

Figur 2 zeigt den Aufbau einer erfindungsgemäßen Primärfeder, wobei die Bildebene durch die Höhenrichtung 1 und die Längenrichtung 2 aufgespannt wird und die Breitenrichtung 3 aus der Bildebene hinaus zeigt. Die Primärfeder umfasst eine mehrschichtige Schubfeder 6, in deren Zentrum ein zentrales Trägerelement 4 angeordnet ist, dessen Längsachse 5 parallel zur Höhenrichtung 1 verläuft und der Hauptwirkungsrichtung der Primärfeder entspricht. Das zentrale Trägerelement 4 ist in diesem Ausführungsbeispiel als Welle aus Metall ausgestaltet, deren Mantelfläche konusförmig nach außen, also von der Längsachse 5 weg, gewölbt ist. Auf dem zentralen Trägerelement 4 sitzt eine innere Elastomerschicht 8 der mehrschichtigen Schubfeder 6, welche mit dem Trägerelement 4 verbunden ist. Weiters umfasst die mehrschichtige Schubfeder 6, in diesem Ausführungsbeispiel zwei weitere Elastomerschichten 18, wobei die Anzahl der weiteren Elastomerschichten 18 variieren kann und von der gesamten zu übertragenden Kraft und der erforderlichen Steifigkeit abhängt. Zwischen zwei Elastomerschichten 8,9,18 ist jeweils eine versteifende Zwischenschicht 10, beispielsweise aus Metall, angeordnet, welches die jeweiligen Elastomerschichten 8,9,18 verbindet. Eine äußere Elastomerschicht 9, also jene Elastomerschicht die am weitesten von der Längsachse 5 entfernt ist, ist mit einem Aufnahmeelement 7 verbunden. Das Aufnahmeelement 7 ist in der abgebildeten Ausführungsvariante als ringförmiger Trägerkörper mit einem aufsetzbaren Deckel ausgestaltet, wobei das Aufnahmeelement 7 über den Deckel beispielsweise mit einem Fahrwerksrahmen eines Drehgestells verbunden werden kann, wodurch eine Kraft in die mehrschichtige Schubfeder 6 eingeleitet wird. In alternativen Ausführungsvarianten entspricht das Aufnahmeelement 7 der äußersten Zwischenschicht 10, welche die äußere Elastomerschicht 9 umgibt.

Die Teilungsebene 13, welche durch die Längsachse 5 des Trägerelementes 4 verläuft und normal auf die Längenrichtung 2 steht, definiert den ersten Abschnitt 14 und den zweiten Abschnitt 15 der mehrschichtigen Schubfeder 6, wie in Fig. 1 zu sehen. In dem ersten Abschnitt 14 ist eine erste Kammer 11 angeordnet, die mit einer im zweiten Abschnitt 15 angeordneten zweiten Kammer 12 über eine Verbindungsleitung 16 verbunden ist. Sowohl die beiden Kammern 11,12 als auch die Verbindungsleitung 16 sind vollständig mit Fluid gefüllt.

Die beiden Kammern 11,12 befinden sich dabei in der inneren Elastomerschicht 8 und sind bis auf die Verbindungsleitung 16 nicht miteinander verbunden. Die Kammern 11,12 können entweder als Aushöhlungen in der inneren Elastomerschicht 8 oder als ballonartige Säcke, welche in die innere Elastomerschicht 8 eingelassen sind, ausgestaltet sein. Um die Kammern 11,12 abdichten zu können bzw. die Montage der Primärfeder zu ermöglichen, ist eine innere

Zwischenschicht 19, welche zwischen der inneren Elastomerschicht 8 und dem zentralen Trägerelement 4 angeordnet ist, in Höhenrichtung 1 gesehen, zweiteilig ausgeführt, wobei ein Teil oberhalb der Kammern 11,12 und ein Teil unterhalb der Kammern 11,12 angeordnet ist. Beide Teile der inneren Zwischenschicht 19 sind mit dem zentralen Trägerelement 4 verschweißt.

Das in den Figuren gezeigte Ausführungsbeispiel bezieht sich auf eine Variante der Erfindung, in der jeweils eine erste Kammer 11 und eine zweite Kammer 12 vorgesehen sind. Es versteht sich jedoch von selbst, dass anstatt jeweils einer Kammer auch mehr als eine erste 11 bzw. zweite Kammer 12 denkbar sind. Die ersten Kammern 11 sind dabei im ersten Abschnitt 14 und die zweiten Kammern 12 im zweiten Abschnitt 15 angeordnet. Alternative Varianten können einerseits vorsehen, dass die Kammern 11,12 bezogen auf die Längsachse 5, in Umfangsrichtung in einer einzigen Elastomerschicht 8,9 oder radial in mehreren Elastomerschichten 8,9 verteilt sind.

Die beiden Kammern 11,12 sind mit einem Fluid gefüllt, welches vorgegebene Eigenschaften hinsichtlich der Viskosität, des Temperaturbereichs, in dem das Fluid einsatzbereit ist, und hinsichtlich der Leckagedetektion aufweist. Mittels der Verbindungsleitung 16 sind die Kammern 11,12 miteinander verbunden, so dass Fluid zwischen der ersten Kammer 11 und der zweiten Kammer 12 ausgetauscht werden kann. Die Umwandungen der Kammern 11,12 sind elastisch ausgeführt.

In einer weiteren alternativen Ausführungsvariante kann neben der Teilungsebene 13 eine weitere Teilungsebene, welche ebenfalls durch die Längsachse 5 des zentralen Trägerelementes 4 verläuft, vorgesehen sein, die jeweils wiederum einen weiteren ersten und zweiten Abschnitt definiert. Jedem der weiteren Abschnitte wird zumindest eine weitere erste und zweite Kammer zugeordnet, welche durch eine weitere Verbindungsleitung verbunden sind, sodass sich ein zweites, vom ersten separates, Fluidsystem ausbildet. Es ist auch denkbar, das erste mit dem zweiten Fluidsystem zu verbinden.

Die Verbindungsleitung 16 im dargestellten Beispiel verläuft zu einem großen Teil durch Kanäle im zentralen Trägerelement 4 selbst und wird an der in Hauptwirkungsrichtung oberen Seite des zentralen Trägerelementes 4 mittels eines U-förmigen Verbindungsstücks von einem mit der ersten Kammer 11 verbundenen ersten Kanal (der parallel zur Längsachse 5 verläuft) in einen mit der zweiten Kammer 12 verbundenen zweiten Kanal (der ebenfalls parallel zur Längsachse 5 verläuft) übergeleitet. Die Kanäle der Verbindungsleitung 16 werden jeweils durch eine Bohrung radial zur Längsachse 5 mit der jeweiligen Kammer 11,12 verbunden. Statt des U-förmigen Verbindungsstückes ist es ebenfalls denkbar, eine radiale Verbindungsbohrung vorzusehen, sodass die Verbindungsleitung 16 vollständig im zentralen Trägerelement 4 verläuft.

Dies stellt jedoch nur eine von vielen möglichen Varianten der Gestaltung der Verbindungsleitung 16 dar. So kann statt den zwei Kanälen auch eine ringförmige oder spiralförmige Verbindungsleitung 16 vorgesehen sein, welche im Wesentlichen in Umfangsrichtung des zentralen Trägerelementes 4 verläuft. Dabei kann die Verbindungsleitung 16 auch mehrmals um das zentrale Trägerelement 4 geführt sein, bevor sie in die zweite Kammer 12 einmündet.

In einer bevorzugten Ausführungsvariante sind auch eine erste und eine zweite Kammer 11,12 in der äußeren Elastomerschicht 9 angeordnet. Dabei verläuft eine Verbindungsleitung 16 durch das Aufnahmeelement 7. Dazu weist das Aufnahmeelement zur Anbindung an die Kammern 11,12 üblicher Weise jeweils eine Radialbohrung in radialer Richtung auf. Diese Radialbohrung ist Teil der Verbindungsleitung 16 und ist entweder an einen Verbindungskanal angeschlossen, welcher vollständig im Inneren des Aufnahmeelementes 7 verläuft oder aber die Radialbohrung durchquert das Aufnahmeelement 7 vollständig, wobei die Verbindungsleitung 16 durch ein an der Außenseite des Aufnahmeelementes 7 angeordnetes Rohr- oder Kanalsystem ausgebildet ist. Der Verlauf der Verbindungsleitung 16 kann dabei in Umfangsrichtung der Schubfeder 6 kreisförmig oder spiralförmig ausgebildet sein.

Gemäß einer nicht beanspruchten Anordnung ist die Verbindungsleitung 16 in jener Zwischenschicht 10 angeordnet, welche zwischen der inneren Elastomerschicht 8 und der an diese angrenzenden weiteren Elastomerschicht 18 liegt, sofern die Kammern 11,12 eben in der inneren Elastomerschicht 8 angeordnet sind bzw. in jener Zwischenschicht 10 angeordnet ist, welche zwischen der äußerem Elastomerschicht 9 und der an diese angrenzenden weiteren Elastomerschicht 18 liegt, sofern die Kammern 11,12 eben in der inneren Elastomerschicht 9 angeordnet sind. Dazu besteht diese Zwischenschicht 10 aus zwei Plattenelementen, welche in Bezug zur Längsachse 5 konzentrisch ausgebildet sind, und dicht miteinander verbunden, vorzugsweise verschweißt, sind. Die Verbindungsleitung 16 selbst ist dabei im Zwischenraum zwischen den beiden Plattenelementen angeordnet. Beispielsweise kann die Verbindungsleitung als Nut oder Ausnehmung in zumindest einem der Plattenelemente eingearbeitet sein.

Eine weitere Möglichkeit für die Gestaltung der Verbindungsleitung 16, welche alternativ für alle Ausführungsvarianten denkbar ist, stellt ein mäanderförmiger Verlauf dar. Dabei erstreckt sich die größte Abmessung der Verbindungsleitung 16 im Wesentlichen in Richtung der Höhenrichtung 1. Beispielsweise verläuft die Verbindungsleitung 16 dabei in einem Abschnitt in Höhenrichtung 1 bis zu einem ersten Extremum an dem der Verlauf umgekehrt wird und bis zu einem zweiten Extremum gegen die Höhenrichtung 1 verläuft, sodass bei bogenförmigen Übergängen an den Extrema ein einer Sinusschwingung ähnlicher Verlauf resultiert. Dieser Abschnitt kann, je nach verfügbarem Bauraum beliebig oft wiederholt werden, bis die Verbindungsleitung in die jeweils andere Kammer 11,12 einmündet.

Durch die Verbindungsleitung 16 kann sich Fluid im gesamten Fluidsystem, also den Kammern 11,12 und der Verbindungsleitung 16, frei bewegen. Dies führt dazu, dass bei niedrigen Anregungsfrequenzen, in der Regel unter 1 Hz, oder einzelnen konstanten Belastungen, Fluid von der ersten 11 in die zweite Kammer 12 bzw. umgekehrt befördert werden kann. Wird beispielsweise die erste Kammer 11 verformt, so kann Fluid in die zweite Kammer 12 übertreten so dass die Verformung unterstützt wird. Wechselt die Belastung, sodass die zweite Kammer 12 verformt wird, strömt Fluid in die erste Kammer 11 zurück. Wird die Primärfeder nicht entlang der Längenrichtung 2 belastet, so stellt sich ein Gleichgewicht im Fluidsystem ein und Fluid verteilt sich gleichmäßig in den Kammern 11,12 und der Verbindungsleitung 16.

Bei hohen Anregungsfrequenzen, in der Regel über 1 Hz, wechselt die Belastungsrichtung in der Längenrichtung 2 jedoch so schnell, dass das Fluid, aufgrund der Gestaltung der Verbindungsleitung 16, nicht mehr ausreichend Zeit hat und sozusagen zu träge ist, um zwischen den Kammern 11,12 ausgetauscht zu werden. In den Kammern 11,12 baut sich durch das inkompressible Fluid und die elastischen Umwandungen ein Druck auf, der dafür sorgt, dass die Primärfeder in Richtung der Längenrichtung 2 weniger nachgiebig ist und daher eine höhere Steifigkeit aufweist. Einseitige Verformungen, wie zuvor beschrieben, können nicht mehr auftreten und eine Schlingerbewegung kann dadurch effektiv unterdrückt werden.

Alternativ kann durch eine entsprechende Gestaltung der Verbindungsleitung 16, also die Dimensionierung der Querschnittsfläche der Verbindungsleitung 16 bzw. durch ein entsprechendes Verhältnis zwischen Querschnittsfläche und Länge der Verbindungsleitung 16 das an sich bekannte Prinzip der Schwingungstilgung mittels schwingender Flüssigkeitssäulen in einem abgeschlossenen Fluidsystem, umfassend die Kammern 11,12 und die Verbindungsleitung 16, ausgenützt werden, da das Fluidsystem ein schwingungsfähiges System mit bestimmten Eigenfrequenzen darstellt. Schwingt die Flüssigkeitssäule im Gegentakt zur aufgezwungenen Anregungsfrequenz, so wirkt diese als Schwingungstilger, wodurch bei entsprechender Dimensionierung die Steifigkeit in radialer Richtung bei hohen Anregungsfrequenzen erhöht ist.

Figur 3 zeigt, dass die beiden Kammern 11,12 in Umfangsrichtung nicht miteinander verbunden sind, sondern einzig und allein durch die Verbindungsleitung 16. Auch ist die zweiteilige Ausführung der inneren Zwischenschicht 19 besonders gut zu erkenne.

Ein Fahrwerk, insbesondere Drehgestell, mit einer erfindungsgemäßen Primärfeder ist nicht gesondert dargestellt. Jedoch ist aus den Figuren 2 und 3 zu erkennen, dass am zentralen Trägerelement 4 Mittel zur Befestigung an einer Radachse, vorzugsweise als konischer Zapfen mit Gewindebohrungen ausgeführt, vorgesehen sind. Das Aufnahmeelement 7 weist weitere Mittel zur Verbindung mit einem Fahrwerksgestell auf, vorzugsweise Bohrungen zur Aufnahme von Schrauben sowie eine Zentrierung zur Aufnahme eines Lagerzapfens. Es versteht sich jedoch von selbst, dass die Anbindung an den Fahrwerksrahmen genauso über das zentrale Trägerelement 4 und die Anbindung an die Radachse bzw. ein Radsatzlager über das Aufnahmeelement 7 erfolgen kann, wenn die entsprechenden Mittel zur Anbindung vorgesehen sind.

Ebenfalls ist aus den Figuren 2 und 3 ersichtlich, dass eine Entkoppelungsschicht 17 zwischen der Radachse und der inneren Elastomerschicht 8 der Schubfeder 6 angeordnet ist. Diese dient dazu, die Kraftübertragung entlang der Hauptwirkungsrichtung zu gewährleisten, denn aufgrund der Schwächung des tragenden Querschnittes der die Kammern 11,12 aufweisenden Elastomerschicht 8,9 durch die Kammern 11,12 könnte der verbleibende tragende Querschnitt die aufzunehmenden Kräfte nicht mehr selbstständig übertragen. Die Entkoppelungsschicht 17 kann dabei beispielsweise als Schichtfeder oder Gleitlager ausgeführt sein. In gleicher Weise ist bei einem umgekehrten Einbau der Primärfeder, also wenn das zentrale Trägerelement 4 mit der Radachse und das Aufnahmeelement 7 mit dem Fahrwerksrahmen verbunden ist, die Entkoppelungsschicht 17 zwischen der die Kammern 11,12 aufweisenden Elastomerschicht 8,9 und dem Fahrwerksrahmen angeordnet.

### Bezugszeichenliste:

- 1: Höhenrichtung
- 2: Längenrichtung
- 3: Breitenrichtung
- 4: zentrales Trägerelement
- 5: Längsachse des zentralen Trägerelementes 4
- 6: mehrschichtige Schubfeder
- 7: Aufnahmeelement
- 8: innere Elastomerschicht
- 9: äußere Elastomerschicht
- 10: versteifende Zwischenschicht
- 11: erste Kammer
- 12: zweite Kammer
- 13: Teilungsebene
- 14: erster Abschnitt der Schubfeder 6
- 15: zweiter Abschnitt des Schubfeder 6
- 16: Verbindungsleitung
- 17: Entkoppelungsschicht
- 18: weitere Elastomerschichten
- 19: innere Zwischenschicht

## Patentansprüche

1. Primärfeder für ein Schienenfahrzeug, mit einem eine Längsachse (5) aufweisenden zentralen Trägerelement (4), einem Federelement und einem Aufnahmeelement (7),
wobei das Federelement zwischen dem zentralen Trägerelement (4) und dem Aufnahmeelement (7) angeordnet ist und sowohl mit dem zentralen Trägerelement (4) als auch mit dem Aufnahmeelement (7) verbunden ist,
wobei zumindest zwei mit Fluid gefüllte Kammern (11,12) vorgesehen sind, welche miteinander verbunden sind, um abhängig von einer aufgezwungenen Anregungsfrequenz Fluid zwischen den Kammern (11,12) auszutauschen, wodurch sich die Steifigkeit in radialer Richtung frequenzabhängig verändert, wobei das
Federelement als mehrschichtige Schubfeder (6) ausgebildet ist und zumindest eine innere Elastomerschicht (8), welche mit dem zentralen Trägerelement (4) verbunden ist, eine äußere Elastomerschicht (9), welche mit dem Aufnahmeelement (7) verbunden ist, sowie jeweils eine versteifende Zwischenschicht (10) zwischen den Elastomerschichten (8,9,18) umfasst, wobei die Elastomerschichten (8,9,18) bezüglich der Längsachse (5) eine konische Form aufweisen und die Kammern (11,12) innerhalb einer Elastomerschicht (8,9,18) angeordnet sind,
**dadurch gekennzeichnet, dass** in der inneren Elastomerschicht (8) zumindest eine erste (11) und zumindest eine zweite Kammer (12) angeordnet sind, wobei die zumindest eine erste Kammer (11) mit der zumindest einen zweiten Kammer (12) über eine Verbindungsleitung (16) verbunden sind und die Verbindungsleitung (16) zumindest teilweise durch das zentrale Trägerelement (4) geführt ist.

2. Primärfeder nach Anspruch 1, **dadurch gekennzeichnet, dass** durch eine Teilungsebene (13), welche durch die Längsachse (5) des zentralen Trägerelementes (4) verläuft, ein erster Abschnitt (14) und ein zweiter Abschnitt (15) der Schubfeder (6) definiert ist, wobei im ersten Abschnitt (14) zumindest die
erste Kammer (11) und im zweiten Abschnitt (15) zumindest die zweite Kammer (12) angeordnet ist und abhängig von der Anregungsfrequenz ein Austausch von Fluid zwischen der zumindest einen ersten Kammer (11) und der zumindest einen zweiten Kammer (12) stattfindet.

3. Primärfeder nach Anspruch 1 oder 2, **dadurch gekennzeichnet, dass** in der äußeren Elastomerschicht (9) zumindest eine weitere erste (11) und zumindest eine weitere zweite Kammer (12) angeordnet ist.

4. Primärfeder nach Anspruch 3, **dadurch gekennzeichnet, dass** eine Verbindungsleitung (16) zwischen der zumindest einen weiteren ersten Kammer (11) und der zumindest einen weiteren zweiten Kammer (12)
zumindest teilweise durch das Aufnahmeelement (7) verläuft.

5. Primärfeder nach einem der Ansprüche 1 bis 4,
**dadurch gekennzeichnet, dass** in der Verbindungsleitung (16) Mittel zur Unterbrechung des Fluidaustauschs zwischen der zumindest einen ersten Kammer (11) und der zumindest einen zweiten Kammer (12) angeordnet sind.

6. Primärfeder nach einem der Ansprüche 1 bis 5,
**dadurch gekennzeichnet, dass** die Verbindungsleitung (16) kreisförmig oder spiralförmig in Bezug zur Längsachse (5) verläuft.

7. Primärfeder nach einem der Ansprüche 1 bis 6,
**dadurch gekennzeichnet, dass** die Verbindungsleitung (16) mäanderförmig in Bezug zur Längsachse (5) verläuft.

8. Primärfeder nach einem der Ansprüche 1 bis 7,
**dadurch gekennzeichnet, dass** die zumindest eine erste Kammer (11), die zumindest eine zweite Kammer (12) und die Verbindungsleitung (16) ein abgeschlossenes Fluidsystem bilden, welches vollständig mit Fluid gefüllt ist und dass das Fluid das Fluidsystem frei durchströmt.

9. Primärfeder nach Anspruch 8, **dadurch gekennzeichnet,**
**dass** die Umwandung der zumindest zwei mit Fluid gefüllten Kammern (11,12) elastisch ist.

10. Primärfeder nach einem der Ansprüche 1 bis 9,
**dadurch gekennzeichnet, dass** die Menge des bei einer niedrigen Anregungsfrequenz über die Verbindungsleitung (16) ausgetauschten Fluids größer ist als jene bei einer hohen Anregungsfrequenz, so dass die Steifigkeit der Primärfeder in radialer Richtung bei einer niedrigen Anregungsfrequenz niedriger ist als bei einer hohen Anregungsfrequenz.

11. Fahrwerk, insbesondere Drehgestell, eines Schienenfahrzeuges, mit zumindest einer Radachse, einem Fahrwerksrahmen und zumindest einer Primärfedernach dem Anspruch 2,
wobei die Teilungsebene (13) der mehrschichtigen Schubfeder (6) parallel zu der Radachse ausgerichtet ist.

12. Fahrwerk, insbesondere Drehgestell, eines Schienenfahrzeuges nach Anspruch 11,
**dadurch**
**gekennzeichnet, dass** das zentrale Trägerelement (4) der zumindest einen Primärfeder mit der Radachse und das Aufnahmeelement (7) der zumindest einen Primärfeder mit dem Fahrwerksrahmen verbunden ist.

13. Fahrwerk, insbesondere Drehgestell, eines Schienenfahrzeuges nach Anspruch 12,
**dadurch**
**gekennzeichnet, dass** zumindest eine Entkoppelungsschicht (17), vorzugsweise ein Gleitlager oder eine Schichtfeder, zwischen der mehrschichtigen Schubfeder (6) und der Radachse angeordnet ist, um die zumindest eine Elastomerschicht (8,9), welche die Kammern (11,12) aufweist, entlang der zur Höhenrichtung (1) parallelen Hauptwirkungsrichtung zu entlasten.

14. Fahrwerk, insbesondere Drehgestell, eines Schienenfahrzeuges nach Anspruch 11,
**dadurch**
**gekennzeichnet, dass** das zentrale Trägerelement (4) der zumindest einen Primärfeder mit dem Fahrwerksrahmen und das Aufnahmeelement (7) der zumindest einen Primärfeder mit der Radachse verbunden ist.

## Claims

1. Primary spring for a rail vehicle, having a central carrier element (4) which has a longitudinal axis (5), having a spring element and having a receiving element (7), wherein the spring element is arranged between the central carrier element (4) and the receiving element (7) and is connected both to the central carrier element (4) and to the receiving element (7), wherein at least two fluid-filled chambers (11, 12) are provided which are connected to one another in order to exchange fluid between the chambers (11, 12) independently of a forcibly imparted excitation frequency, whereby the stiffness in a radial direction changes in a frequency-dependent manner, wherein the spring element is formed as a multi-layer shear spring (6) and comprises at least one inner elastomer layer (8), which is connected to the central carrier element (4), an outer elastomer layer (9), which is connected to the receiving element (7), and in each case one stiffening intermediate layer (10) between the elastomer layers (8, 9, 18), wherein the elastomer layers (8, 9, 18) have a conical shape in relation to the longitudinal axis (5), and the chambers (11, 12) are arranged within one elastomer layer (8, 9, 18),
**characterized in that**
at least one first (11) and at least one second chamber (12) are arranged in the inner elastomer layer (8), wherein the at least one first chamber (11) is connected to the at least one second chamber (12) via a connecting line (16), and the connecting line (16) is led at least partially through the central carrier element (4).

2. Primary spring according to Claim 1, **characterized in that** a parting plane (13) which runs through the longitudinal axis (5) of the central carrier element (4) defines a first section (14) and a second section (15) of the shear spring (6), wherein at least the first chamber (11) is arranged in the first section (14) and at least the second chamber (12) is arranged in the second section (15), and an exchange of fluid between the at least one first chamber (11) and the at least one second chamber (12) takes place in a manner dependent on the excitation frequency.

3. Primary spring according to Claim 1 or 2, **characterized in that** at least one further first (11) and at least one further second chamber (12) are arranged in the outer elastomer layer (9).

4. Primary spring according to Claim 3, **characterized in that** a connecting line (16) between the at least one further first chamber (11) and the at least one further second chamber (12) runs at least partially through the receiving element (7) .

5. Primary spring according to any of Claims 1 to 4, **characterized in that** means for interrupting the fluid exchange between the at least one first chamber (11) and the at least one second chamber (12) are arranged in the connecting line (16).

6. Primary spring according to any of Claims 1 to 5, **characterized in that** the connecting line (16) runs in circular or spiral-shaped fashion in relation to the longitudinal axis (5).

7. Primary spring according to any of Claims 1 to 6, **characterized in that** the connecting line (16) runs in meandering fashion in relation to the longitudinal axis (5).

8. Primary spring according to any of Claims 1 to 7,
**characterized in that** the at least one first chamber (11), the at least one second chamber (12) and the connecting line (16) form a closed fluid system which is completely filled with fluid, and **in that** the fluid flows freely through the fluid system.

9. Primary spring according to Claim 8,
**characterized in that** the wall surrounding the at least two fluid-filled chambers (11, 12) is elastic.

10. Primary spring according to any of Claims 1 to 9, **characterized in that** the quantity of the fluid exchanged via the connecting line (16) in the presence of a low excitation frequency is greater than that in the presence of a high excitation frequency, such that the stiffness of the primary spring in a radial direction is lower in the presence of a low excitation frequency than in the presence of a high excitation frequency.

11. Chassis, in particular bogie, of a rail vehicle, having at least one wheel axle, having a chassis frame and having at least one primary spring according to Claim 2,
wherein the parting plane (13) of the multi-layer shear spring (6) is oriented parallel to the wheel axle.

12. Chassis, in particular bogie, of a rail vehicle according to Claim 11, **characterized in that** the central carrier element (4) of the at least one primary spring is connected to the wheel axle and the receiving element (7) of the at least one primary spring is connected to the chassis frame.

13. Chassis, in particular bogie, of a rail vehicle according to Claim 12, **characterized in that** at least one decoupling layer (17), preferably a slide bearing or a layered spring, is arranged between the multi-layer shear spring (6) and the wheel axle in order to relieve the at least one elastomer layer (8, 9), which has the chambers (11, 12), of load along the main action direction which is parallel to the vertical direction (1).

14. Chassis, in particular bogie, of a rail vehicle according to Claim 11, **characterized in that** the central carrier element (4) of the at least one primary spring is connected to the chassis frame and the receiving element (7) of the at least one primary spring is connected to the wheel axle.

## Revendications

1. Ressort primaire pour un véhicule ferroviaire, comprenant un élément de support (4) central ayant un axe longitudinal (5), un élément de ressort et un élément de réception (7), dans lequel l'élément de ressort est disposé entre l'élément de support central (4) et l'élément de réception (7) et est relié aussi bien à l'élément de support central (4) qu'à l'élément de réception (7),
dans lequel au moins deux chambres (11, 12) remplies avec un fluide sont prévues, qui sont reliées entre elles pour échanger du fluide entre les chambres (11, 12) en fonction d'une fréquence d'excitation forcée, au moyen de quoi la rigidité dans la direction radiale varie en fonction de la fréquence,
dans lequel l'élément de ressort est configuré sous forme de ressort de poussée (6) multicouche et comprend au moins une couche d'élastomère intérieure (8) qui est reliée à l'élément de support central (4), une couche d'élastomère extérieure (9) qui est reliée à l'élément de réception (7) ainsi qu'à chaque fois une couche intermédiaire de renfort (10) entre les couches d'élastomère (8, 9, 18), dans lequel les couches d'élastomère (8, 9, 18) ont une forme conique par rapport à l'axe longitudinal (5) et les chambres (11, 12) sont disposées à l'intérieur d'une couche d'élastomère (8, 9, 18),
**caractérisé en ce que**, dans la couche d'élastomère intérieure (8), au moins une première (11) et au moins une seconde (12) chambres sont disposées, dans lequel l'au moins une première chambre (11) est reliée avec l'au moins une seconde chambre (12) par le biais d'une conduite de raccordement (16) et la conduite de raccordement (16) est guidée au moins en partie à travers l'élément de support central (4).

2. Ressort primaire selon la revendication 1, **caractérisé en ce qu'**une première section (14) et une seconde section (15) du ressort de poussée (6) sont définies par un plan de division (13) qui s'étend à travers l'axe longitudinal (5) de l'élément de support central (4), dans lequel, dans la première section (14), est disposée au moins la première chambre (11) et, dans la seconde section (15), est disposée au moins la seconde chambre (12), et un échange de fluide entre l'au moins une première chambre (11) et l'au moins une seconde chambre (12) se produit en fonction de la fréquence d'excitation.

3. Ressort primaire selon la revendication 1 ou 2, **caractérisé en ce qu'**au moins une première chambre additionnelle (11) et au moins une seconde chambre additionnelle (12) sont disposées dans la couche d'élastomère extérieure (9).

4. Ressort primaire selon la revendication 3, **caractérisé en ce qu'**une conduite de raccordement (16) entre l'au moins une première chambre additionnelle (11) et l'au moins une seconde chambre additionnelle (12) s'étend au moins en partie à travers l'élément de réception (7).

5. Ressort primaire selon l'une des revendications 1 à 4, **caractérisé en ce que** des moyens pour interrompre l'échange de fluide entre l'au moins une première chambre (11) et l'au moins une seconde chambre (12) sont disposés dans la conduite de raccordement (16).

6. Ressort primaire selon l'une des revendications 1 à 5, **caractérisé en ce que** la conduite de raccordement (16) s'étend de façon circulaire ou en forme de spirale par rapport à l'axe longitudinal (5).

7. Ressort primaire selon l'une des revendications 1 à 6, **caractérisé en ce que** la conduite de raccordement (16) s'étend en forme de méandres par rapport à l'axe longitudinal (5).

8. Ressort primaire selon l'une des revendications 1 à 7, **caractérisé en ce que** l'au moins une première chambre (11), l'au moins une seconde chambre (12) et la conduite de raccordement (16) forment un système de fluide fermé, qui est entièrement rempli avec du fluide et **en ce que** le fluide du système de fluide circule librement.

9. Ressort primaire selon la revendication 8, **caractérisé en ce que** la paroi périphérique des au moins deux chambres (11, 12) remplies de fluide est élastique.

10. Ressort primaire selon l'une des revendications 1 à 9, **caractérisé en ce que** la quantité du fluide échangée via la conduite de raccordement (16) en présence d'une fréquence d'excitation basse est plus grande que celle échangée en présence d'une fréquence d'excitation élevée, de telle manière que la rigidité du ressort primaire dans la direction radiale est plus faible en présence d'une fréquence d'excitation basse qu'en présence d'une fréquence d'excitation élevée.

11. Train de roulement, en particulier bogie d'un véhicule ferroviaire, comprenant un essieu, un châssis de train de roulement et au moins un ressort primaire selon la revendication 2, dans lequel le plan de division (13) du ressort de poussée (6) multicouche est parallèle à l'essieu.

12. Train de roulement, en particulier bogie d'un véhicule ferroviaire selon la revendication 11, **caractérisé en ce que** l'élément de support central (4) de l'au moins un ressort primaire est relié à l'essieu et l'élément de réception (7) de l'au moins un ressort primaire est relié au châssis du train de roulement.

13. Train de roulement, en particulier bogie d'un véhicule ferroviaire selon la revendication 12, **caractérisé en ce qu'**au moins une couche de désolidarisation (17), de préférence un palier lisse ou un ressort en couches est disposé(e) entre le ressort de poussée (6) multicouche et l'essieu, pour décharger l'au moins une couche d'élastomère (8, 9) qui comprend les chambres (11, 12), le long de la direction d'action principale parallèle à la direction de hauteur (1).

14. Train de roulement, en particulier bogie d'un véhicule ferroviaire selon la revendication 11, **caractérisé en ce que** l'élément de support central (4) de l'au moins un ressort primaire est relié au châssis du train de roulement et l'élément de réception (7) de l'au moins un ressort primaire est relié à l'essieu.
